# EUROPEAN PATENT SPECIFICATION

(11) **EP 1 908 950 B1**
(45) Date of publication and mention of the grant of the patent: **14.09.2011**
(21) Application number: 07252954.8
(22) Date of filing: 26.07.2007
(51) Int. Cl.: F02K 1/12, F02K 1/15

(54) **Pressure balance control for gas turbine engine nozzle**
Druckausgleichssteuerung für eine Gasturbinenmotordüse
Contrôle à équilibrage de pression pour tuyère de moteur de turbine à gaz

(30) Priority: 26.09.2006 US 527188
(43) Date of publication of application: 09.04.2008
(73) Proprietor: United Technologies Corporation, Hartford, CT 06101 (US)
(72) Inventor: Swanson, Timothy A., Connecticut 06238 (US); Kehret, Debora F., Connecticut 06040 (US); Poth, Stefan M., Connecticut 06074 (US); Grove, Donald E., Connecticut 06118 (US)
(74) Representative: Leckey, David Herbert

(56) References cited:
- EP-A2- 0 833 047
- US-A- 4 420 932

## Description

### BACKGROUND OF THE INVENTION

This application relates to a control for air pressure supplied to assist in balancing forces on a linkage for controlling a nozzle cross-sectional area in a gas turbine engine.

A gas turbine engine includes a fan section, a compression section, a combustion section and a turbine section. An axis of the engine is centrally disposed along the engine and extends longitudinally through the sections. A primary flow path for working medium gases extends axially through the sections of the engine.

The nozzle for the gas turbine engine may be provided with an actuation structure that can cause a plurality of flaps to pivot radially inwardly or outwardly to control the size of the nozzle opening. In the prior art, a hydraulic actuator drives a ring which is connected through linkages to the plurality of flaps. A control causes the actuator to move the flaps between various positions to provide a desired cross-sectional area.

In the prior art, it is also known to supply air pressure to a rear face of the ring to assist in handling a load on the actuation structure. In part, this load is created since there is relatively high engine air pressure within the nozzle, and acting on an inner surface of the flaps, and relatively low ambient temperature on an outer surface of the flaps. The high pressure supplied to the rear face of the ring assists in carrying some of this load. However, at times, the ratio between the pressure within the nozzle and the ambient pressure is much lower. As an example, at low speed/low altitude applications the ratio is typically low. In such applications there may be too much air pressure supplied to the ring. This is undesirable as it causes excessive load to be imparted on the actuation system.

A prior art nozzle, having the features of the preamble of claim 1, is disclosed in US-4420932. Another prior art nozzle is shown in EP-0833047.

### SUMMARY OF THE INVENTION

There is provided, according to the present invention, a nozzle for a gas turbine engine as claimed in claim 1 and a method of operating a gas turbine engine as claimed in claim 7.

In the disclosed embodiment of this invention, a control modulates the flow of pressurized air to the rear face of the ring based upon sensed system conditions. A pressure sensor senses the pressure within the nozzle and the ambient pressure, and may limit or block the flow of pressurized air to the ring when this ratio is relatively low. In one disclosed embodiment, should the ratio of engine pressure to ambient pressure be less than three, then the flow of pressurized air to the ring is reduced or eliminated. The control may be based upon a local controller, by the overall engine controller, or may be controlled simply by a pressure responsive valve acting upon the difference in pressure.

These and other features of the present invention can be best understood from the following specification and drawings, the following of which is a brief description.

### BRIEF DESCRIPTION OF THE DRAWINGS

Figure 1A shows a prior art gas turbine engine.
Figure 1B shows one portion of a convergent-divergent axisymmetric nozzle for the gas turbine engine.
Figure 2 shows the inventive structure.

### DETAILED DESCRIPTION OF THE PREFERRED EMBODIMENT

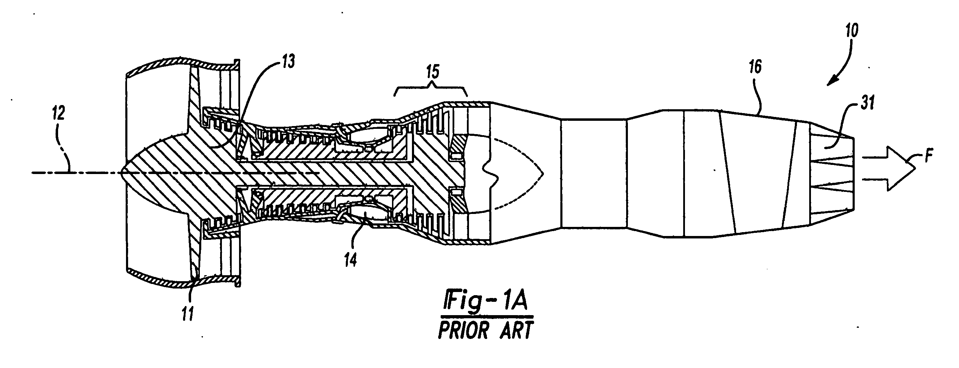

Figure 1A shows a gas turbine engine 10. As known, a fan section 11 moves air and rotates about an axial center line 12. A compressor section 13, a combustion section 14, and a turbine section 15 are also centered on the axial center line 12. A nozzle section 16 of the turbine discharges gas downstream. Figure 1A is a highly schematic view, however, it does show the main components of the gas turbine engine. Further, while a particular type of gas turbine engine is illustrated in this figure, it should be understood that the present invention extends to other types of gas turbine engines.

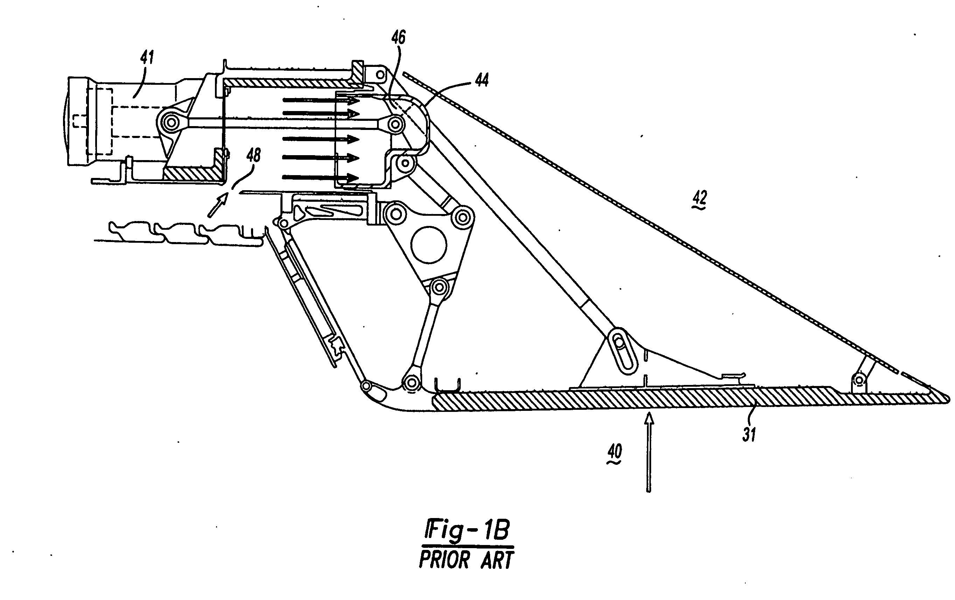

As also shown in Figure 1A, a plurality of flaps 31 at the end of the nozzle 16 can be pivoted radially inwardly or outwardly to control the cross-sectional area at the nozzle. This is, as known in the art, and an actuation structure for pivoting the flaps 31 is shown in Figure 1B. As shown, a hydraulic actuator 41 drives a sync ring 44 through a connection at 46. Air pressure 40 within the nozzle acts on an inner surface of the flaps 31, while an ambient pressure 42 outside the flaps 31 acts on an outer surface of the flaps 31. Typically, the air pressure at 40 is much greater than the ambient air pressure 42. This imbalance creates forces on the sync ring 44. Thus, pressurized air is delivered through openings 48 to the rear surface of the sync ring 44 to assist in handling the load.

At times, however, the pressure ratio between the areas 40 and 42 will be lower. This occurs, for example, at low altitude/low speed flying. In such instances, the force supplied through the openings 48 through the pressurized air on the rear surface of the sync ring 44 can be unduly high and can itself create undesirable loads and stresses on the various connections.

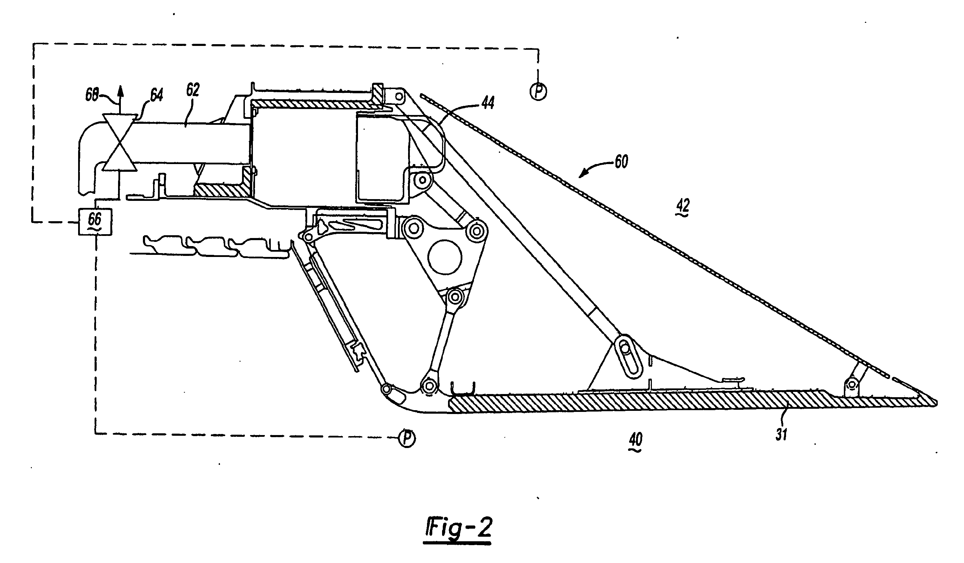

Thus, as shown in Figure 2, in an inventive nozzle control 60, an air supply tube 62 is provided with a valve 64, and which is controlled by a control 66. Control 66 may trigger the valve 64 either through a simple delta pressure control based upon the pressures at 40 and 42, or the control can be based upon an electronic control. In one application, it may be the controller for the entire engine. Essentially, should the pressure ratio between areas 40 and 42 be lower (e.g., less than three), then it would be desirable to block airflow to the sync ring 44, and instead open the cavity to a lower pressure source (e.g., atmosphere) as shown at 68. Notably, the hydraulic actuator 41 is omitted from the view but would preferably be included.

In this manner, the higher pressure forces on the sync ring 44 at certain conditions are lowered to atmospheric pressure or less.

A preferred and more detailed valve is disclosed in concurrently filed U.S. Patent Application US-2008-0098742 entitled "Combined Control for Supplying Cooling Air and Support Air in a Turbine Engine Nozzle."

Although a preferred embodiment of this invention has been disclosed, a worker of ordinary skill in this art would recognize that certain modifications would come within the scope of this invention. For that reason, the following claims should be studied to determine the true scope and content of this invention.

## Claims

1. A nozzle for a gas turbine engine (10) comprising:
a plurality of flaps (31) which may move to provide a desired cross-sectional area for a nozzle outlet;
an actuator structure for driving said flaps (31) through a linkage, said actuator structure including at least one actuator member (41) moving the flaps (31) through an intermediate structure (44); and
an air supply for supplying pressurized air to a surface of said intermediate structure (44), said pressurized air assisting said actuator member (41) in holding said flaps (31) at a desired position and resisting a force from pressure within said nozzle (60), a valve (64) for controlling flow of pressurized air to said surface of said intermediate structure (44), and a control (66) for said valve (64) reducing the flow of air when certain system conditions are sensed,
**characterised in that**:
a pressure ratio between the air pressure within said nozzle, and an ambient pressure is utilized to control said valve; and
said intermediate structure (44) is a sync ring defining a chamber for receiving pressurized air, and being connected to said actuator member (41).

2. The nozzle as set forth in Claim 1, wherein the flow of pressurized air to said surface is reduced when said ratio is less than three.

3. The nozzle as set forth in Claim 1 or 2, wherein said actuator member (41) is a fluid actuator.

4. The nozzle as set forth in any preceding Claim, wherein said control is a pressure difference actuated valve.

5. The nozzle as set forth in any preceding Claim, wherein said control (66) is part of an overall control for a gas turbine engine (10).

6. The nozzle as set forth in any preceding Claim, wherein said valve (64) dumps air to atmosphere (68) when the flow of air to the intermediate member (44) is to be reduced.

7. A method of operating a gas turbine engine (10) comprising the steps of:
providing an actuator structure for driving flaps (31) through a linkage to provide a desired cross-sectional area for a nozzle outlet, said actuator structure including at least one actuator member (41) moving the flaps (31) through an intermediate structure (44); and
supplying pressurized air to a surface of said intermediate structure (44), said pressurized air assisting said actuator member (41) in holding said flap (31) at a desired position and resisting a force from pressure within said nozzle, and reducing flow of pressurized air to said surface of said intermediate structure (44) when certain system conditions are sensed,
**characterised in that**:
a pressure ratio between the air pressure within said nozzle, and an ambient pressure is the sensed system condition; and
said intermediate structure (44) is a sync ring defining a chamber for receiving pressurized air and being connected to said actuator member (41).

8. The method as set forth in Claim 7, wherein the flow of pressurized air to said surface is reduced when said ratio is less than three.

9. The method as set forth in Claim 7 or 8, wherein said actuator member (41) is a fluid actuator.

## Patentansprüche

1. Düse für eine Gasturbinenmaschine (10) umfassend:
eine Mehrzahl von Klappen (31), die sich bewegen können, um einen gewünschten Querschnittsbereich für einen Düsenauslass bereitzustellen;
eine Aktuatoranordnung zum Antreiben der Klappen (31) durch eine Verbindung, wobei die Aktuatoranordnung zumindest ein Aktuatorelement (41) beinhaltet, das die Klappen (31) durch eine Zwischenanordnung (44) bewegt; und
eine Luftzufuhr zur Zuführung von druckbeaufschlagter Luft an eine Fläche der Zwischenanordnung (44), wobei die druckbeaufschlagte Luft das Aktuatorelement (41) bei dem Halten der Klappen (31) in einer gewünschten Position und bei dem Widerstehen einer Druckkraft innerhalb der Düse (60) unterstützt, ein Ventil (64) zum Steuern/ Regeln von Strömung druckbeaufschlagter Luft zu der Fläche der Zwischenanordnung (44) und eine Steuerung/ Regelung (66) für das Ventil (64), welche die Strömung von Luft reduziert, wenn bestimmte Systemzustände erkannt werden,
**dadurch gekennzeichnet, dass**:
ein Druckverhältnis zwischen dem Luftdruck innerhalb der Düse und einem Umgebungsdruck verwendet wird, um das Ventil zu steuern/regeln; und
die Zwischenanordnung (44) ein Synchronisationsring ist, der eine Kammer zur Aufnahme druckbeaufschlagter Luft bildet und mit dem Aktuatorelement (41) verbunden ist.

2. Düse nach Anspruch 1, wobei die Strömung druckbeaufschlagter Luft zu der Fläche reduziert ist, wenn das Verhältnis geringer als drei ist.

3. Düse nach Anspruch 1 oder 2, wobei das Aktuatorelement (41) ein Fluidaktuator ist.

4. Düse nach einem der vorangehenden Ansprüche, wobei die Steuerung/ Regelung ein durch den Druckunterschied betätigtes Ventil ist.

5. Düse nach einem der vorangehenden Ansprüche, wobei die Steuerung/ Regelung (66) Teil einer Gesamtsteuerung/ -regelung für eine Gasturbinenmaschine (10) ist.

6. Düse nach einem der vorangehenden Ansprüche, wobei das Ventil (64) Luft in die Atmosphäre (68) abgibt, wenn der Strom von Luft zu dem Zwischenelement (44) zu reduzieren ist.

7. Verfahren zum Betreiben einer Gasturbinenmaschine (10) umfassend die Schritte:
Bereitstellen einer Aktuatoranordnung zum Antrieb von Klappen (31) durch eine Verbindung, um einen gewünschten Querschnittsbereich für einen Düsenauslass bereitzustellen, wobei die Aktuatoranordnung zumindest ein Aktuatorelement (41) beinhaltet, das die Klappen (31) durch eine Zwischenanordnung (44) bewegt; und
Zuführen druckbeaufschlagter Luft an eine Fläche der Zwischenanordnung (44), wobei die druckbeaufschlagte Luft das Aktuatorelement (41) beim Halten der Klappe (31) in einer gewünschten Position und beim Widerstehen einer Druckkraft innerhalb der Düse unterstützt, und Strömung druckbeaufschlagter Luft zu der Fläche der dazwischen liegenden Struktur (44) reduziert, wenn bestimmte Systemzustände erkannt werden,
**dadurch gekennzeichnet, dass**:
ein Druckverhältnis zwischen dem Luftdruck innerhalb der Düse und dem Umgebungsdruck der erkannte Systemzustand ist; und
die Zwischenanordnung (44) ein Synchronisationsring ist, der eine Kammer zum Aufnehmen druckbeaufschlagter Luft bildet und mit dem Aktuatorelement (41) verbunden ist.

8. Verfahren nach Anspruch 7, wobei die Strömung druckbeaufschlagter Luft an die Fläche reduziert ist, wenn das Verhältnis geringer als drei ist.

9. Verfahren nach Anspruch 7 oder 8, wobei das Aktuatorelement (41) ein Flu-idaktuator ist.

## Revendications

1. Tuyère de moteur de turbine à gaz (10) comprenant:
une pluralité de volets (31) qui peuvent être déplacés pour fournir une surface en section transversale souhaitée pour une sortie de tuyère ;
une structure d'actionneur pour entraîner lesdits volets (31) par le biais d'une tringlerie, ladite structure d'actionneur comportant au moins un organe d'actionneur (41) déplaçant les volets (31) à travers une structure intermédiaire (44) ; et
une alimentation en air pour alimenter en air sous pression une surface de ladite structure intermédiaire (44), ledit air sous pression aidant ledit organe d'actionneur (41) à retenir lesdits volets (31) dans une position souhaitée et à résister à une force provenant de la pression dans ladite tuyère (60), une soupape (64) pour contrôler le flux d'air sous pression vers ladite surface de ladite structure intermédiaire (44), et une commande (66) pour ladite soupape (64) réduisant le flux d'air lorsque certaines conditions du système sont détectées, **caractérisée en ce que** : un rapport de pression entre la pression d'air à l'intérieur de ladite tuyère et une pression ambiante est utilisé pour contrôler ladite soupape ; et ladite structure intermédiaire (44) est une bague de synchronisation définissant une chambre pour recevoir de l'air sous pression, et étant connectée audit organe d'actionneur (41).

2. Tuyère selon la revendication 1, dans laquelle le flux d'air sous pression vers ladite surface est réduit lorsque ledit rapport est inférieur à trois.

3. Tuyère selon la revendication 1 ou 2, dans laquelle ledit organe d'actionneur (41) est un actionneur fluidique.

4. Tuyère selon l'une quelconque des revendications précédentes, dans laquelle ladite commande set une soupape actionnée par la différence de pression.

5. Tuyère selon l'une quelconque des revendications précédentes, dans laquelle ladite commande (66) fait partie d'une commande globale pour un moteur de turbine à gaz (10).

6. Tuyère selon l'une quelconque des revendications précédentes, dans laquelle ladite soupape (64) rejette l'air vers l'atmosphère (68) lorsque le flux d'air vers la structure intermédiaire (44) doit être réduit.

7. Procédé pour faire fonctionner un moteur de turbine à gaz (10), comprenant les étapes consistant à :
fournir une structure d'actionneur pour entraîner des volets (31) par le biais d'une tringlerie pour fournir une surface en section transversale souhaitée pour une sortie de tuyère, ladite structure d'actionneur comportant au moins un organe d'actionneur (41) déplaçant les volets (31) à travers une structure intermédiaire (44) ; et
alimenter en air sous pression une surface de ladite structure intermédiaire (44), ledit air sous pression aidant ledit organe d'actionneur (41) à retenir lesdits volets (31) dans une position souhaitée et à résister à une force provenant de la pression dans ladite tuyère, et réduire le flux d'air sous pression vers ladite surface de ladite structure intermédiaire (44) lorsque certaines conditions du système sont détectées,
**caractérisé en ce que** :
la condition du système détectée est un rapport de pression entre la pression d'air à l'intérieur de ladite tuyère et une pression ambiante ; et
ladite structure intermédiaire (44) est une bague de synchronisation définissant une chambre pour recevoir de l'air sous pression, et étant connectée audit organe d'actionneur (41).

8. Procédé selon la revendication 7, dans lequel le flux d'air sous pression vers ladite surface est réduit lorsque ledit rapport est inférieur à trois.

9. Procédé selon la revendication 7 ou 8, dans lequel ledit organe d'actionneur (41) est un actionneur fluidique.
